# EUROPÄISCHE PATENTSCHRIFT

(11) **EP 2 392 968 B1**
(45) Veröffentlichungstag und Bekanntmachung des Hinweises auf die Patenterteilung: **15.11.2023**
(21) Anmeldenummer: 11003802.3
(22) Anmeldetag: 10.05.2011
(51) Int. Cl.: G03B 21/20, F21V 21/30, G02B 19/00

(54) **Beleuchtungsprojektor**
Light-projector
Projecteur d'éclairage

(30) Priorität: 01.06.2010 DE 102010022383
(43) Veröffentlichungstag der Anmeldung: 07.12.2011
(73) Patentinhaber: ERCO GmbH, 58507 Lüdenscheid (DE)
(72) Erfinder: Beykirch, Jörg, Dipl.-Phys. Dr. rer. nat, 50678 Köln (DE)
(74) Vertreter: Roche, von Westernhagen & Ehresmann

(56) Entgegenhaltungen:
- EP-A1- 2 112 552
- JP-A- 2008 083 538
- US-A1- 2009 051 831
- US-A1- 2010 128 229
- GUANGZHEN WANG ET AL: "Collimating lens for light-emitting-diode light source based on non-imaging optics", OPTICS LETTERS, OPTICAL SOCIETY OF AMERICA, US, vol. 51, no. 11, 10 April 2012 (2012-04-10), pages 1654-1659, XP001574737, ISSN: 0146-9592, DOI: 10.1364/AO.51.001654 [retrieved on 2012-04-04]

## Beschreibung

Die Erfindung betrifft einen Projektor nach dem Oberbegriff des Anspruches 1.

Aus der US 2009/051831 A1 geht eine Vorrichtung hervor, in der eine Mehrzahl von Beleuchtungsmodulen vorgesehen ist, die jeweils eine Lichtquelle und ein optisches Element aufweisen. Weiter umfasst die dort beschriebene Vorrichtung ein LCD-Display und eine Projektionslinse. Ein Hinweis, dass dieser Projektor auch als Projektionsstrahler eingesetzt werden könnte, ergibt sich aus dieser Druckschrift nicht.

Derartige Projektoren werden von der Anmelderin seit geraumer Zeit entwickelt und gefertigt.

Beispielsweise ist unter der Marke "Pollux" der Anmelderin ein druckschriftlich nicht belegbarer Projektor mit den Merkmalen des Oberbegriffes des Anspruches 1 in Folge offenkundiger Vorbenutzung bekannt geworden. Dieser sogenannte Projektionsstrahler weist bekannterweise eine Niedervolthalogenlampe oder Halogenmetalldampflampe als Leuchtmittel auf. Als auszuleuchtendes Bildelement ist es bekannt, einen sogenannten Konturenschieber oder ein Gobo anzuordnen.

Bei dem bekannten Projektor ist ein Beleuchtungssystem vorgesehen, welches die vorerwähnte Lichtquelle und einen Reflektor umfasst. Das von der Lichtquelle emittierte, bzw. von dem Reflektor reflektierte Licht wird auf das Bildelement geworfen, um dieses auszuleuchten.

Der bekannte Projektor umfasst darüber hinaus eine Abbildungsoptik, mit der das Bildelement auf eine Gebäudefläche oder Gebäudeteilfläche projizierbar ist. Als Gebäudefläche im Sinne der vorliegenden Patentanmeldung werden Boden-, Decken- und Wandflächen im Innen- und Außenbereich verstanden. Auch auszuleuchtende Kunstwerke oder Objekte in einem Gebäude können im Sinne der vorliegenden Erfindung eine Gebäudefläche oder eine Gebäudeteilfläche bereitstellen.

Aus der US 2009/051831 A1 geht eine Vorrichtung hervor, bei der eine Mehrzahl von Beleuchtungsmodulen vorgesehen ist, die jeweils eine Lichtquelle und ein optisches Element aufweisen. Weiter umfasst die dort beschriebene Vorrichtung ein LCD-Display und eine Projektionslinse. Ein Hinweis, dass dieser Projektor auch im Sinne eines Projektionsstrahlers eingesetzt werden könnte, ergibt sich aus dieser Druckschrift nicht. Im Übrigen geht aus dieser Druckschrift ein LCD-Pannel hervor, aber kein Projektor mit einem Konturenschieber.

Aus der EP 2 112 552 A1 geht eine Beleuchtungsvorrichtung mit einem Parabolspiegel hervor, der das von der Punktlichtquelle emittierte Licht bündelt. Einen Projektor mit einem zwischen einem Bildelement und der Lichtquelle angeordnetem Linsenelement, das als Kollimatoroptik ausgebildet ist, offenbart die Druckschrift nicht. Auch zeigt die Druckschrift kein Bildelement, das von einem Konturenschieber bereitgestellt ist.

Die Aufgabe der Erfindung besteht darin, den eingangs beschriebenen, durch offenkundige Vorbenutzung bekannt gewordenen Projektor mit den Merkmalen des Oberbegriffes des Anspruches 1 derartig weiterzubilden, dass die Projektion des Bildelementes auf die Gebäudefläche verbessert ist.

Die Erfindung löst diese Aufgabe mit den Merkmalen des Anspruches 1.

Das Prinzip der Erfindung besteht somit im Wesentlichen darin, in Abwendung von dem bisherigen Einsatz herkömmlicher Lichtquellen wenigstens eine LED einzusetzen. Dabei können eine oder mehrere LED's die Lichtquelle des Beleuchtungssystems bereitstellen.

Zusätzlich zu der LED ist wenigstens ein erstes Linsenelement vorgesehen. Dieses ist in der Lage, das von den LED's emittierte Licht zu bündeln und auf das Bildelement zu werfen. Das erste Linsenelement ist insoweit als Kollimatoroptik ausgebildet.

Als Projektor außerhalb des Geltungsbereichs der Ansprüche wird eine Vorrichtung angesehen, die ein Gobo auf eine Gebäudefläche projizieren kann. Ein Gobo ist eine Lochmaske, die beispielsweise einen Schriftzug oder ein Muster oder ein Symbol aufweist. Das Gobo ist mittels einer Halteeinrichtung, insbesondere an einer Wechselfassung, an dem Projektor befestigt. Die Wechselfassung ist von außen leicht zugänglich, so dass das Gobo auf einfache Weise ausgetauscht werden kann und durch ein anderes Gobo mit gleichen Abmessungen ersetzt werden kann.

Die Lochmaske ist beispielsweise mittels eines Laserverfahrens oder dergleichen ausgeschnitten. Nur in den Bereichen, in denen die Lochmaske Aussparungen aufweist, kann Licht hindurch treten und auf die Gebäudewand geworfen werden.

Im Sinne der vorliegenden Erfindung ist der Einsatz eines Konturenschiebers vorgesehen. Ein Konturenschieber ist eine Vorrichtung, die, gleichermaßen wie das Gobo, von einer Bedienperson auf einfache Weise von dem Projektor gelöst, bzw. daran befestigt werden kann. Außerdem kann der Konturenschieber, in einem am Projektor befestigten Zustand, individuell eingestellt werden. Hierzu weist der Konturenschieber mehrere, beispielsweise vier, Bedienungselemente auf, mit denen eine Lichtfeldkontur geändert werden kann. Dies kann beispielsweise erforderlich sein, um ein Kunstwerk, z. B. ein rechteckiges Gemälde, mit einer möglichst rechteckigen, an die Kontur des Gemäldes angepassten Kontur, auszuleuchten. Hierzu kann eine eine Öffnung des Konturenschiebers umgebende Begrenzungskontur variiert werden.

Schließlich kann auch ein Diapositiv, ein Infrarotfilter oder eine Farbfilterfolie, die nicht Teil der beanspruchten Erfindung sind, als Bildelement vorgesehen sein.

Zur Klarstellung wird angemerkt, dass sich der Schutzbereich nur auf Projektoren bezieht, bei denen das Bildelement von einem Konturenschieber bereitgestellt ist.

Die Lichtquelle und wenigstens das erste Linsenelement stellen gemeinsam das Beleuchtungssystem des Projektors bereit. Mit dem Beleuchtungssystem wird das Bildelement möglichst gleichmäßig, möglichst verlustarm, und mit einem möglichst großen Lichtstrom ausgeleuchtet. Damit kann auch eine Projektion des Bildelementes auf weit entfernten Gebäudewänden optimiert werden.

Der Projektor weist darüber hinaus eine Abbildungsoptik auf. Diese ist bei einem Ausführungsbeispiel der Erfindung von einem zweiten Linsenelement bereitgestellt. Dieses ist im Lichtweg hinter dem Bildelement angeordnet.

Bei dem erfindungsgemäßen Projektor sind das Beleuchtungssystem, das Bildelement und die Abbildungsoptik entlang einer optischen Achse angeordnet. Gemäß einer bevorzugten Ausführungsform der Erfindung ist die optische Achse von einer Geraden gebildet.

Alternativ kann der Projektor auch eine optische Achse aufweisen, die einen Knick umfasst. Hier kann unter Zuhilfenahme eines Reflektors auch eine Lichtlenkung um beispielsweise 90° erreicht werden.

Bei einer Variante der Erfindung weist das Beleuchtungssystem eine Erstreckung quer zu der optischen Achse auf, die eine Erstreckung des Bildelementes quer zu der optischen Achse übersteigt. Bei dieser Ausführungsform der Erfindung kann das erste Linsenelement und/oder die flächige Erstreckung der Anordnung der Lichtquellen derartig groß bemessen sein, dass sie die Erstreckung des Bildelementes, quer zur optischen Achse, übersteigt, insbesondere deutlich übersteigt.

Dabei kann vorteilhafterweise weiter vorgesehen sein, dass das erste Linsenelement das von der Lichtquelle emittierte Licht auf einen Brennpunkt hin fokussiert, der in Lichtrichtung hinter dem Bildelement angeordnet ist. Das Bildelement ist bezüglich seines Abstandes zu dem ersten Linsenelement vorteilhaft derartig angeordnet, dass die Randstrahlen des gebündelten, von dem ersten Linsenelement emittierten Lichtstrahlenbündels gerade durch das Bildelement durchtreten können, oder innerhalb der flächigen Erstreckung des Bildelementes auf dieses treffen. Damit kann erreicht werden, dass das Bildelement mit einem sehr großen Lichtstrom verlustarm ausgeleuchtet wird. Damit kann mit einer besonders hohen Projektionsqualität das Bildelement auf die Gebäudefläche geworfen werden.

Bei einer alternativen Ausgestaltung der Erfindung weist das erste Linsenelement des Beleuchtungssystems eine Erstreckung quer zu der optischen Achse auf, die im Wesentlichen einer Erstreckung des Bildelementes quer zu der optischen Achse entspricht. Bei dieser Variante der Erfindung ist es nicht erforderlich, das Beleuchtungssystem mit einer übergroßen Aufbauhöhe auszubilden. Hier kann das von der LED oder von den LED's emittierte Licht mittels des ersten Linsenelementes zu einem parallelen Lichtstrahlenbündel gebündelt werden, so dass das Bildelement von einem im Wesentlichen parallel ausgerichteten Lichtstrahlenbündel beaufschlagt wird.

Gemäß einer vorteilhaften Ausgestaltung der Erfindung ist eine Vielzahl von LED's vorgesehen, wobei jeder einzelnen LED oder jeweils einer Gruppe von LED's jeweils ein Kollimator zugeordnet ist. Dabei kann das von den Kollimatoren emittierte Licht entweder auf das erste Linsenelement treffen oder - für den Fall, dass die Kollimatoren das erste Linsenelement bereitstellen - direkt auf das Bildelement treffen.

Anders ausgedrückt kann das erste Linsenelement bei der ersten Variante der Erfindung von einer Mehrzahl von Kollimatoren gebildet sein. Alternativ kann dem ersten Linsenelement bei einer zweiten Variante der Erfindung in Lichtrichtung eine Mehrzahl von Kollimatoren vorgeschaltet sein.

Falls eine Mehrzahl von Kollimatoren vorgesehen ist, können diese vorteilhaft entlang einer Ebene angeordnet sein. Diese Ebene ist vorteilhaft im Wesentlichen parallel ausgerichtet zu der Ebene des Bildelementes.

Der Projektor ist an einer Gebäudefläche fest montiert und insoweit ortsfest. Vorteilhafterweise ist der Projektor an einer ersten Gebäudefläche fest montiert und dient zur Projektion des Bildelementes auf eine zweite Gebäudefläche.

Weiter vorteilhaft ist das Bildelement in einer Wechselfassung angeordnet und kann einfach, ggf. werkzeuglos, von einer Bedienperson durch ein anderes Bildelement ausgetauscht werden.

Hierzu weist der Projektor z. B. eine Zugangsöffnung für das Bildelement auf. Gegebenenfalls kann der Projektor auch offen, d. h. frei zugänglich ausgestaltet sein und/oder beispielsweise im Bereich des Bildelementes oder einer Halterungsarmatur für das Bildelement gehäusefrei ausgebildet sein oder eine Gehäuseöffnung oder einen Gehäusedurchbruch aufweisen.

Weitere Vorteile der Erfindung ergeben sich anhand der nicht zitierten Unteransprüche, sowie aus der nachfolgenden Beschreibung der in den Figuren dargestellten Ausführungsbeispiele. In den Zeichnungen zeigen:
- Fig. 1: in einer schematischen, perspektivischen Ansicht einen Gebäuderaum, an dessen Gebäudedecke ein erfindungsgemäßer Projektor angeordnet ist, der auf eine Seitenwand des Gebäuderaumes ein Gobo projiziert,
- Fig. 2: in einer Darstellung gemäß Fig. 1 den Projektor der Fig. 1, bei dem das Gobo durch einen Konturenschieber ersetzt worden ist,
- Fig. 3: in einer schematischen Darstellung einen Konturenschieber, wie er bei einem Projektor gemäß Fig. 2 zum Einsatz kommt,
- Fig. 4: in einer sehr schematischen, teilgeschnittenen Querschnittsansicht den prinzipiellen Aufbau eines erfindungsgemäßen Projektors,
- Fig. 5: in einer Darstellung gemäß Fig. 4 ein weiteres Ausführungsbeispiel des erfindungsgemäßen Projektors,
- Fig. 6: in einer Darstellung gemäß Fig. 4. ein weiteres Ausführungsbeispiel eines erfindungsgemäßen Projektors,
- Fig. 7: in einer Darstellung gemäß Fig. 4 ein weiteres Ausführungsbeispiel eines erfindungsgemäßen Projektors,
- Fig. 8: in einer sehr schematischen Ansichtsdarstellung, etwa gemäß Ansichtspfeil VIII - VIII in Fig. 7, die Kollimatoranordnung der Fig. 7, und
- Fig. 9: in einer weiteren, schematischen Darstellung gemäß Fig. 4 ein weiteres Ausführungsbeispiel eines erfindungsgemäßen Projektors.

Der nachfolgenden detaillierten Figurenbeschreibung sei vorausgeschickt, dass der Übersichtlichkeit halber gleiche oder miteinander vergleichbare Teile oder Elemente mit gleichen Bezugszeichen, teilweise unter Hinzufügung kleiner Buchstaben bezeichnet sind. Weiter sei angemerkt, dass Vorteile oder Merkmale, die nur bei einem Ausführungsbeispiel beschrieben sind, im Rahmen der Erfindung gleichermaßen auch bei den anderen Ausführungsbeispielen vorgesehen sein können, bzw. zu Tage treten können. Schließlich sei angemerkt, dass jedes beschriebene Einzelmerkmal für sich genommen erfindungswesentlich sein kann.

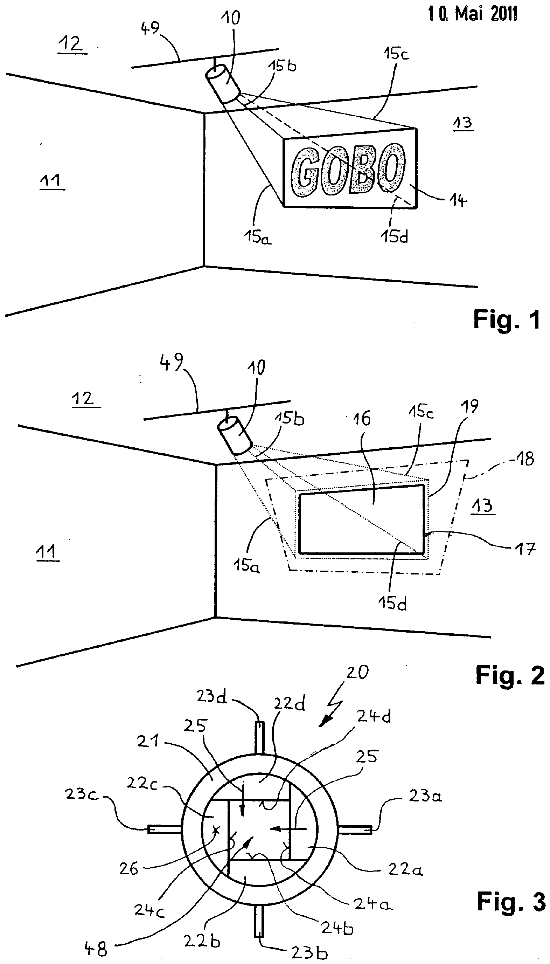

Ausweislich Fig. 1 ist in einer schematischen Darstellung ein Ausführungsbeispiel eines erfindungsgemäßen Projektors, der in seiner Gesamtheit mit 10 bezeichnet ist, angedeutet. Der Projektor 10 ist in einem Gebäuderaum 11, insbesondere an der Decke 12, befestigt und dient der Projektion eines Gobos 14 auf eine Gebäudewand 13. Der Projektor 10 kann beispielsweise in einer angedeuteten Stromschiene 49 montiert sein, und mit dieser beispielsweise mittels eines Stromschienenadapters verbindbar sein. Alternativ kann der Projektor 10 auch unmittelbar fest an der Decke 12 angeordnet sein.

Ausweislich der Fig. 1 erzeugt der Projektor 10 ein durch die Randstrahlen 15a, 15b, 15c, 15d umgrenztes Lichtfeld und projiziert einen Schriftzug, einen sogenanntes Gobo, auf die Gebäudewand 13. Dies wird möglich, indem ein Bildelement von einer Lochmaske gebildet ist, die den entsprechenden Schriftzug, beim Ausführungsbeispiel den Schriftzug "Gobo", aufweist. Als Beispiele für Gobos kommen neben Formen, Namen und Markenslogans häufig auch Muster in Betracht.

Ausweislich Fig. 2 weist der erfindungsgemäße Projektor 10 einen sogenannten Konturenschieber auf, dessen Funktionsweise wie folgt erläutert wird:
Fig. 2 zeigt auf der Gebäudewand 13 ein im Wesentlichen rechteckförmiges Gemälde 16, schematisch dargestellt als Weißfläche mit einer Kontur 17. Auf Grund der angenommenen Geometrie einer quadratischen Lichtaustrittsöffnung am Projektor 10 würde sich ohne Anordnung eines Konturenschiebers z. B. eine im Wesentlichen trapezförmige, unkorrigierte Lichtfeldkontur gemäß der gestrichpunkteten Linie 18 ergeben. Um das Gemälde 16 optimal auszuleuchten, ist es erforderlich, die Kontur des Lichtfeldes an die Kontur 17 des Gemäldes 16 anzupassen. Hierdurch kann in Folge einer entsprechenden Betätigung des Konturenschiebers erreicht werden, dass die Kontur des projizierten Lichtfeldes in die gestrichelte Linie 19 überführt wird, angedeutet durch die Randstrahlen 15a, 15b, 15c, 15d.

Fig. 3 veranschaulicht lediglich sehr schematisch das Funktionsprinzips eines solchen Konturenschiebers: Der Konturenschieber 20 weist ein im Wesentlichen ringförmiges Element 21 auf, in dem vier Schieberelemente 22a, 22b, 22c, 22d fliegend gelagert sind. Jedes Schieberelement 22 verfügt über einen eigenen Betätigungszapfen 23a, 23b, 23c, 23d, an dem eine Bedienperson händisch angreifen kann und das entsprechende Schieberelement 22 verlagern kann.

Jedes Schieberelement 22 umfasst einen eigenen Abschnitt 24a, 24b, 24c, 24d einer Innenkontur, die eine Öffnung 48 umrandet. Jedes Schieberelement 22 ist in Radialrichtung 25 verlagerbar, d. h. verschiebbar, und um eine Schwenkachse 26 schwenkbar. So ist beispielsweise das Schieberelement 22a, durch Angriff an dem Betätigungszapfen 23a in Radialrichtung 25, d. h. bezogen auf die Fig. 3 nach links, verlagerbar, im Sinne einer Verkleinerung der Öffnung 48.

Andererseits ist z. B. das Schieberelement 22c durch Angriff an dem Betätigungszapfen 23c nicht nur in und entgegen der Radialrichtung 25, sondern auch im Sinne einer Verlagerungsbewegung im Uhrzeigersinn und auch entgegen dem Uhrzeigersinn um die angedeutete Schwenkachse 26 verlagerbar.

Damit kann eine Innenkontur, die die Öffnung 48 umrandet, bereitgestellt werden, die sich von den Konturabschnitten 24a, 24b, 24c, 24d bereitstellt und einen beliebigen Polygonzug bildet.

Durch eine entsprechend Verschiebung der Konturenschieber 22a, 22b, 22c, 22d entlang der durch den Ring 21 bereitgestellten Ebene, kann insoweit die ursprüngliche Kontur 18 der Fig. 2 in eine korrigierte Kontur 19 überführt werden.

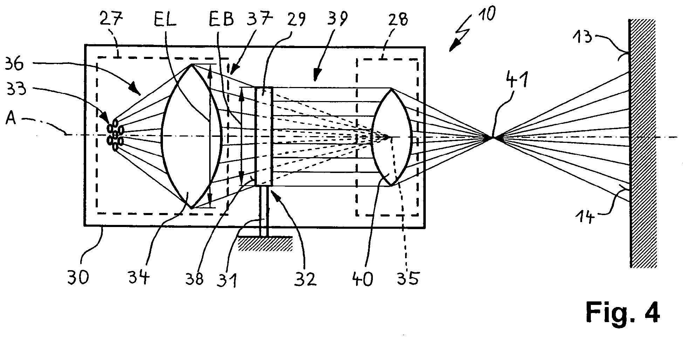

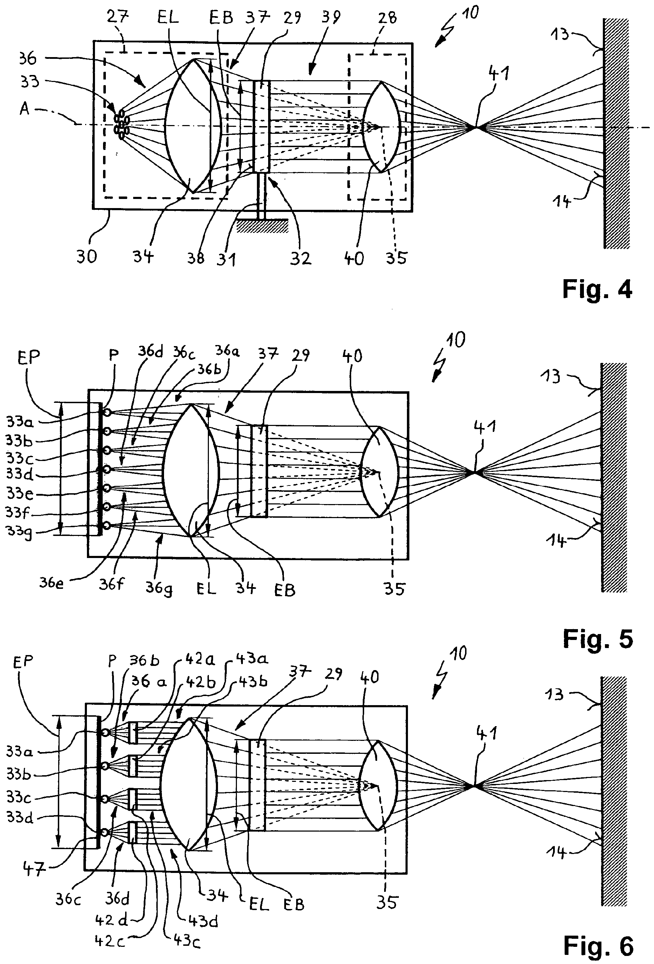

Das lichttechnische Funktionsprinzip eines Projektors 10 soll nun anhand der Fig. 4 erläutert werden:
Fig. 4 zeigt, dass der Projektor 10 ein Beleuchtungssystem 27, eine Abbildungsoptik 28 und ein Bildelement 29 aufweist. Beleuchtungssystem 27, Abbildungsoptik 28 und Bildelement 29 sind beispielsweise innerhalb eines Gehäuses 30 des Projektors 10 angeordnet, wie dies in den Figuren angedeutet ist. Es ist allerdings auch vorstellbar, dass bei einem alternativen Ausführungsbeispiel nur das Beleuchtungssystem 27 in einem Gehäuse angeordnet ist, und die übrigen Elemente, oder einige der übrigen Elemente des Projektors, frei zugänglich, und beispielsweise auf einer Art Stativ, angeordnet sind.

Auch ist vorstellbar, dass sämtliche Elemente des Projektors im Wesentlichen frei zugänglich angeordnet sind.

Das Beleuchtungssystem umfasst bei dem Ausführungsbeispiel der Fig. 4 eine Mehrzahl 33 von LED's. Es kann sich hier beispielsweise um eine Multichip-LED handelt.

Bei einem alternativen Ausführungsbeispiel ist die Anordnung nur einer einzigen LED 33 vorgesehen.

Die Mehrzahl 33 von LED's emittiert Licht, angedeutet durch ein divergierendes Lichtstrahlenbündel 36. Dieses trifft auf ein erstes Linsenelement 34, welches als Kollimatoroptik ausgebildet ist und das Licht fokussiert. Dies soll angedeutet werden durch das Lichtstrahlenbündel 37, welches sich in einem Brennpunkt 35 treffen würde.

Die LED's 33 und das erste Linsenelement 34 bilden zusammen das Beleuchtungssystem 27.

In dem Projektor 10 ist darüber hinaus ein Bildelement 29 angeordnet. Dieses ist auf einem Stativ oder einer Haltearmatur 31 befestigt. Die Haltearmatur umfasst eine lediglich angedeutete Wechselfassung 32, die einen einfachen Austausch und Wechsel des Bildelementes 29 ermöglicht. Beispielsweise kann hierdurch ein Austausch eines ersten Gobos durch ein anderes Gobo vorgenommen werden. Auch sind Wechselarmaturen von der Erfindung mit umfasst, die der Aufnahme zweier Gobos dienen und die wahlweise in den Lichtgang hineinverlagert werden können.

Schließlich kann auch vorgesehen sein, ein Bildelement erster Art, z. B. ein Gobo, durch ein Bildelement zweiter Art, z. B. ein Konturenschieber, oder durch einen IR-Filter oder durch eine Farbfilterfolie zu ersetzen.

Schließlich besteht bei einigen Ausführungsbeispielen auch die Möglichkeit, ein Bildelement, z. B. ein Gobo, mit einem zweiten Element, z. B. einer Farbfilterfolie oder einem IR-Filter, in Reihe zu schalten und gemeinsam zu verwenden. Dafür können die Haltearmatur 31 und/oder die Wechselfassung 32 entweder gesonderte Aufnahmen für zwei unterschiedliche Bildelemente bereitstellen, oder eine gemeinsame Aufnahme, in der die beiden Bildelemente, unmittelbar hintereinander angeordnet, aufgenommen werden.

Bemerkenswert ist, dass das Bildelement 29 für eine Bedienperson frei zugänglich ist. Hierzu ist es entweder gehäusefrei am Projektor festgelegt oder durch eine Gehäuseöffnung einfach erreichbar. Falls eine Gehäuseöffnung vorgesehen ist, kann diese auch durch eine Tür oder ein Klappelement oder einen Deckel verschließbar ausgestaltet sein.

Der Projektor 10 umfasst darüber hinaus eine Abbildungsoptik 28, die von einem zweiten Linsenelement 40 bereitgestellt ist. Das Linsenelement 40 ist in einem Abstand zu dem Bildelement 29 angeordnet, und kann das von dem Bildelement 29 ausgehende, parallele Lichtstrahlenbündel 39 auf einen Brennpunkt 41 hin fokussieren, und so das Gobo 14 spiegelverkehrt auf die Gebäudefläche 13 projizieren.

Das zweite Linsenelement 40 der Abbildungsoptik 28 ist im oder nahe an dem Brennpunkt 35 des ersten Linsenelementes 34 angeordnet.

Das Beleuchtungssystem 27, das Bildelement 29 und die Abbildungsoptik 28 sind entlang einer gemeinsamen optischen Achse A angeordnet. Diese wird im Ausführungsbeispiel der Figuren 4 bis 9 von einer Geraden gebildet.

Bei einer alternativen Ausgestaltung der Erfindung, die in den Figuren nicht dargestellt ist, kann die optische Achse auch einen Knick aufweisen, und die beiden, über den Knick miteinander verbundenen Abschnitte der optischen Achse über einen Reflektor verbinden.

Bei dem Ausführungsbeispiel der Fig. 4 ist deutlich, dass das Bildelement 29 eine Erstreckung EB quer zur optischen Achse A aufweist, die durch die Abmessungen des Bildelementes 29 definiert wird.

Das Beleuchtungssystem 27 weist demgegenüber eine Erstreckung EL, quer zur optischen Achse A auf, die größer ist als die Erstreckung EB.

Bei dem Ausführungsbeispiel der Fig. 4 ist dabei vorgesehen, dass das erste Linsenelement 34 eine Erstreckung EL aufweist, die größer ist als die Erstreckung EB des Bildelementes 29. Dies trifft gleichermaßen auch für die Ausführungsbeispiele der Figuren 5, 6 und 7 zu.

Mit dieser geometrischen Ausbildung geling es, die Eintrittsseite 38 des Bildelementes 29 mit einem sehr großen Lichtstrom zu beaufschlagen. Hierdurch kann das Bildelement 29 von einem sehr hohen Lichtstrom ausgeleuchtet werden.

Zugleich ist mit der erfindungsgemäßen Anordnung eine nahezu Lichtstromverlust freie oder Lichtstromverlust arme Projektion des Gobos möglich, da auf den Einsatz von Reflektoren verzichtet werden kann und Streulichtanteile vernachlässigbar gering gehalten werden können.

Bei dem Ausführungsbeispiel der Fig. 4 ist deutlich, dass wenigstens eine LED 33, vorzugsweise eine Mehrzahl von LED's 33, das Licht divergierend, gemäß dem Lichtstrahlenbündel 36, emittieren können. Von der großen Linse 34 kann das Licht entsprechend eingefangen und auf das Bildelement 29 gelenkt werden.

Bei dem Ausführungsbeispiel der Fig. 5 ist hingegen vorgesehen, eine Mehrzahl von LED's 33a, 33b, 33c, 33d, 33e, 33f, 33g vorzusehen, die ihrerseits bereits eine Anordnung entlang einer großen, flächigen Erstreckung aufweisen. Beispielsweise deuten die Figuren 5 und 6 an, dass eine Mehrzahl von LED's auf einer Platine P angeordnet sein können, die ihrerseits eine Erstreckung EP, quer zur optischen Achse A aufweist, die die Erstreckung EB des Bildelementes 29 übersteigt. Damit kann eine große Anzahl von LED's 33 entlang einer nahezu beliebig groß dimensionierbaren Fläche positioniert werden, und das von den entsprechenden LED's 33a, 33b, 33c, 33d, 33e, 33f, 33g emittierte Licht von dem Linsenelement 34 eingefangen und auf das Bildelement 29 gelenkt werden.

Hierzu sei angemerkt, dass die entsprechende Linse 34, je nachdem, ob es sich um eine oder um mehrere LED's handelt, die dicht beieinander angeordnet sind, wie die Fig. 4 zeigt, oder auch distanziert voneinander angeordnet sein können, wie dies Fig. 5 zeigt, durch aufwändiges Simulationsverfahren berechnet werden können. Hierzu können entsprechende Grenzflächen an dem Linsenelement 34 angeordnet werden, die in Folge von Totalreflektion oder Lichtlenkung das gewünschte Lichtlenkungsverhalten erzielen.

Den Ausführungsbeispielen der Figuren 4 bis 7 ist dabei gemein, dass das von dem ersten Linsenelement 34 emittierte Licht als auf einen Brennpunkt 35 hingerichtetes, fokussiertes Lichtstrahlenbündel 37 ausgebildet ist.

Bei den Ausführungsbeispielen der Figuren 5, 6, 7 und 9 ist die in Fig. 4 dargestellte Halterungsarmatur 31, bzw. die entsprechende Wechselfassung 32, der Übersichtlichkeit halber weggelassen worden, obwohl dem Fachmann deutlich ist, dass auch bei diesen Ausführungsbeispielen diese entsprechenden Halterungen vorhanden sind.

Auch ist zur Erzielung einer größeren Übersicht die gestrichelte Umrandung der Fig. 4, die das Beleuchtungssystem 27 und die Abbildungsoptik 28 andeutet, bei den übrigen Ausführungsbeispielen nicht dargestellt.

Des weiteren sei angemerkt, dass für sämtliche Ausführungsbeispiele gilt, dass diese lediglich einen schematischen, funktionsprinzipiellen Aufbau und Verlauf der Lichtstrahlen zeigen, jedoch keinesfalls maßstäblich zu verstehen sind. Insbesondere ist bei Betrachtung des Ausführungsbeispiels der Fig. 4 deutlich, dass der Abstand zwischen dem Projektor 10 und der zur Projektion dienenden Raumfläche 13 deutlich größer bemessen ist, als dargestellt.

Bei dem Ausführungsbeispiel der Fig. 6 ist deutlich, dass mehrere LED's 33a, 33b, 33c, 33d vorgesehen sind, die auf einer gemeinsamen Platine P, oder was nicht dargestellt ist, auf unterschiedlichen Platinen, angeordnet sein können. Hier besteht die Besonderheit darin, dass jede LED ein eigenes Lichtstrahlenbündel 37a, 37b, 37c, 37d emittiert, welches auf eine gesonderte Optik, den sogenannten Kollimator 42a, 42b, 42c, 42d, trifft. Zwischen den mehreren LED's 33 und dem ersten Linsenelement 34 ist insoweit jeweils ein Kollimator, insbesondere jeweils ein eigener Kollimator, angeordnet. Dieser dient, wie die Lichtstrahlen 36, 43 in Fig. 6 andeuten, dazu, auf das Linsenelement 34 ein im Wesentlichen paralleles Lichtstrahlenbündel zu werfen. Das Linsenelement 34 kann dann dieses parallele Lichtstrahlenbündel 43 zu einem fokussierten Lichtstrahlenbündel 37 bündeln.

Auch hierdurch kann ein nahezu beliebig hoher Lichtstrom auf die Eingangsseite 38 des Linsenelementes 34 gelenkt werden.

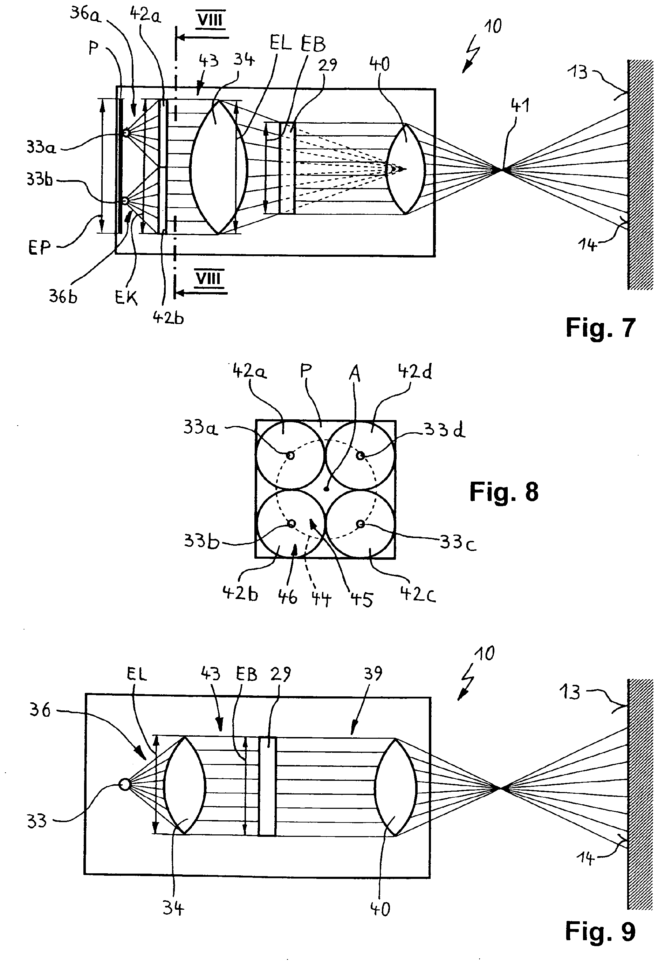

Bei dem Ausführungsbeispiel der Fig. 7 ist vorgesehen, dass die Zahl der LED's 33 und die Zahl der Kollimatoren 42 gegenüber dem Ausführungsbeispiel in Fig. 6 reduziert ist. Bei dem Ausführungsbeispiel der Fig. 7 sind, wie sich dies in Zusammenschau mit Fig. 8 ergibt, vier LED's 33a, 33b, 33c, 33d und eine entsprechende Anzahl von Kollimatoren 42a, 42b, 42c, 42d vorgesehen. Die LED's 33 sind entlang einer Kreislinie 44 angeordnet. Die vier Kollimatoren 42a, 42b, 42c, 42d können auf Stoß angeordnet sein, und weisen jeweils eine Kreisform auf. Insgesamt ergibt sich z. B. eine nahezu quadratische Fläche einer Platine P.

Bemerkenswert ist auch hier, dass die Quererstreckung EP der Platine P größer ist, als die Quererstreckung EP des Bildelementes 29. Auch ist die Quererstreckung EK der Kollimatoranordnung 42 größer als die des Bildelementes 29.

Auch ist bemerkenswert, dass ein paralleles Lichtstrahlenbündel 43 die Anordnung der Kollimatoren 42a, 42b, 42c, 42d verlässt und auf die Eintrittsseite der Linse 34 trifft, die dieses Lichtstrahlenbündel fokussiert, so dass ein hoher Lichtstrom auf die Eintrittsseite des Bildelementes 29 geworfen wird.

Bezüglich des Ausführungsbeispieles der Fig. 8 sei angemerkt, dass hier vier Kollimatoren 42a, 42b, 42c, 42d, identischer Bauform, vorgesehen sein können, die unter rotationssymmetrischer Anordnung positioniert werden. Es genügt, ein einziges Kollimatorelement 42 zu berechnen. Dies kann in einer einzigen Form mehrfach gefertigt werden. Mehrere, identisch ausgebildete Kollimatoren können dann unter rotationssymmetrischer Anordnung, wie dies Fig. 8 zeigt, auf einer gemeinsamen Platine P eingesetzt werden.

Schließlich zeigt Fig. 9 ein alternatives Ausführungsbeispiel eines erfindungsgemäßen Projektors 10: Hier ist beispielhaft für eine Schar an Ausführungsbeispielen das Beleuchtungssystem 27 von wenigstens einer LED 33 und einem ersten Linsenelement 34 gebildet. Die Quererstreckung EL des Beleuchtungssystems 27 ist bei diesem Ausführungsbeispiel etwa so groß wie die Quererstreckung EB des Bildelementes 29. Hier verlässt das Linsenelement 34 ein im Wesentlichen parallel ausgerichtetes Lichtstrahlenbündel und leuchtet das Bildelement 29 gleichmäßig aus.

Bei diesem Ausführungsbeispiel kann das Linsenelement 34 von einem einzigen Bauelement oder von einer Mehrzahl von Bauelementen bereitgestellt sein. Beispielsweise kann das Linsenelement 34 von einer Mehrzahl von Kollimatoren 42 bereitgestellt sein, was in den Figuren nicht dargestellt ist.

In diesem Ausführungsbeispiel können eine oder mehrere LED's 33 vorgesehen sein.

In einem weiteren, nicht dargestellten Ausführungsbeispiel, ähnlich der Fig. 9, ist ein Beleuchtungssystem 27 von einer und mehreren LED's und von einer oder mehreren Kollimatoren gebildet. Die Kollimatoren können paralleles Licht unmittelbar auf die Eingangsseite des Bildelementes 29 werfen und stellen das Linsenelement gemäß der Erfindung bereit.

Der Vollständigkeit halber sei angemerkt, dass bei dem Ausführungsbeispiel der Fig. 9 das zweite Linsenelement 40, das zu der Abbildungsoptik 28 gehört, vorteilhafterweise Abmessungen aufweist, die im Wesentlichen den Abmessungen des Bildelementes 29 entsprechen.

Insoweit ist von erfindungswesentlicher Bedeutung, dass bei den Ausführungsbeispielen gemäß den Figuren 4 bis 8 die Abmessungen des Beleuchtungssystems 27 größer sind als die Abmessungen der Abbildungsoptik 28, wohingegen bei dem Ausführungsbeispiel der Fig. 9 und weiteren entsprechenden, nicht dargestellten, Ausführungsbeispielen die Abmessung des Beleuchtungssystems 27 etwa so groß ist, wie die Abmessung der Abbildungsoptik.

Schließlich sei weiter der Vollständigkeit halber angemerkt, dass das Bildelement vorzugsweise eine im Wesentlichen quadratische Kontur aufweist, aber auch eine flächige Erstreckung mit einer anderen beliebigen, z. B. auch kreisförmigen oder ovalen oder rechteckigen Kontur aufweisen kann.

Schließlich sei angemerkt, dass die Ebene, entlang der sich das am Projektor befestigte Bildelement 29 erstreckt, eine Bildebene definiert. Die optische Achse ist orthogonal zu der Bildebene ausgerichtet.

Die Kollimatoren 42 und/oder das erste Linsenelement 34 können aus Glas oder transparentem Kunststoff bestehen.

Bei sämtlichen Ausführungsbeispielen der Erfindung kann die Abbildungsoptik, wie in den Figuren dargestellt, ein einziges Linsenelement 40, oder, was nicht dargestellt ist, auch mehrere Linsenelemente umfassen.

## Patentansprüche

1. Projektor (10), mit einem Beleuchtungssystem (27) zur Ausleuchtung eines Bildelementes (29), und mit einer Abbildungsoptik (28), mit der das Bildelement auf eine Gebäudefläche oder Gebäudeteilfläche (13) projizierbar ist, **dadurch gekennzeichnet, dass** als Lichtquelle des Beleuchtungssystems wenigstens eine LED (33, 33a, 33b, 33c, 33d, 33e, 33f, 33g) vorgesehen ist, dass zwischen dem Bildelement und der Lichtquelle wenigstens ein als Kollimatoroptik ausgebildetes erstes Linsenelement (34) angeordnet ist, und dass das Bildelement (29) von einem Konturenschieber bereitgestellt ist.

2. Projektor nach Anspruch 1, **dadurch gekennzeichnet, dass** das Beleuchtungssystem (27), das Bildelement (29) und die Abbildungsoptik (28) entlang einer optischen Achse (A) angeordnet sind.

3. Projektor nach Anspruch 1 oder 2, **dadurch gekennzeichnet, dass** das Beleuchtungssystem (27) eine Erstreckung (EP, EL) quer zu der optischen Achse (A) aufweist, die eine Erstreckung (EB) des Bildelementes quer zu der optischen Achse übersteigt.

4. Projektor nach einem der vorangegangenen Ansprüche, **dadurch gekennzeichnet, dass** das erste Linsenelement (34) des Beleuchtungssystems (27) eine Erstreckung (EL) quer zu der optischen Achse (A) aufweist, die eine Erstreckung (EB) des Bildelementes (29) quer zu der optischen Achse übersteigt.

5. Projektor nach Anspruch 4, **dadurch gekennzeichnet, dass** die Lichtquelle (33) von einer Mehrzahl von LED's (33, 33a, 33b, 33c, 33d, 33e, 33f, 33g) gebildet ist, die entlang einer Platine (P) angeordnet sind, die eine Erstreckung (EP) quer zu der optischen Achse (A) aufweist, die eine Erstreckung (EB) des Bildelementes quer zu der optischen Achse übersteigt.

6. Projektor nach einem der vorangegangenen Ansprüche, **dadurch gekennzeichnet, dass** das erste Linsenelement (34) das von der Lichtquelle (33) emittierte Licht auf einen Brennpunkt (35) fokussiert, der in Lichtrichtung hinter dem Bildelement (29) angeordnet ist.

7. Projektor nach Anspruch 1 oder 2, **dadurch gekennzeichnet, dass** das erste Linsenelement (34) des Beleuchtungssystems eine Erstreckung (EL) quer zu der optischen Achse aufweist, die im wesentlichen einer Erstreckung (EB) des Bildelementes quer zu der optischen Achse entspricht (Fig. 9).

8. Projektor nach Anspruch 7, **dadurch gekennzeichnet, dass** das erste Linsenelement (34) das von der Lichtquelle (33) emittierte Licht derartig bündelt, dass das Bildelement (29) von einem im wesentlichen parallelen Lichtstrahlenbündel beaufschlagt wird (Fig. 9).

9. Projektor nach einem der vorangegangenen Ansprüche, **dadurch gekennzeichnet, dass** die Abbildungsoptik (28) ein zweites Linsenelement (40) aufweist, das nahe des Brennpunktes (35) des ersten Linsenelementes angeordnet ist.

10. Projektor nach einem der vorangegangenen Ansprüche, **dadurch gekennzeichnet, dass** das erste Linsenelement (34) von einer Mehrzahl von Kollimatoren (42a, 42b, 42c, 42d) gebildet ist, die insbesondere entlang einer Ebene angeordnet sind.

11. Projektor nach einem der vorangegangenen Ansprüche, **dadurch gekennzeichnet, dass** das dem ersten Linsenelement (34) in Lichtrichtung eine Mehrzahl von Kollimatoren (42a, 42b, 42c, 42d) vorgeschaltet ist, die insbesondere entlang einer Ebene angeordnet sind

12. Projektor nach einem der vorangegangenen Ansprüche, **dadurch gekennzeichnet, dass** jedem Kollimator (42a, 42b, 42c, 42d) der Mehrzahl von Kollimatoren jeweils wenigstens eine LED (33a, 33b, 33c, 33d) zugeordnet ist.

13. Projektor nach einem der vorangegangenen Ansprüche, **dadurch gekennzeichnet, dass** der Projektor (10) an einer Gebäudefläche (12) fest montiert ist.

14. Projektor nach einem der vorangegangenen Ansprüche, **dadurch gekennzeichnet, dass** das Bildelement in einer Wechselfassung (32) angeordnet ist.

## Claims

1. Projector (10), having a lighting system (27) for lighting an image element (29), and having a projection lens (28) with which the image element can be projected onto a building surface or partial building surface (13), **characterised in that** at least one LED (33, 33a, 33b, 33c, 33d 33e, 33f, 33g) is provided as a light source of the lighting system, **in that** at least one first lens element (34) designed as a collimating lens is arranged between the image element and the light source, and **in that** the image element (29) is provided by a framing attachment.

2. Projector according to claim 1, **characterised in that** the lighting system (27), the image element (29) and the projection lens (28) are arranged along an optical axis (A).

3. Projector according to claim 1 or 2, **characterised in that** the lighting system (27) has an extension (EP, EL) that is transverse to the optical axis (A) and that exceeds an extension (EB) of the image element which is transverse to the optical axis.

4. Projector according to one of the preceding claims, **characterised in that** the first lens element (34) of the lighting system (27) has an extension (EL) that is transverse to the optical axis (A) and that exceeds an extension (EB) of the image element (29) which is transverse to the optical axis.

5. Projector according to claim 4, **characterised in that** the light source (33) is formed by a plurality of LEDs (33, 33a, 33b, 33c, 33d, 33e, 33f, 33g) which are arranged along a circuit board (P) that has an extension (EP) which is transverse to the optical axis (A) and which exceeds an extension (EB) of the image element which is transverse to the optical axis.

6. Projector according to one of the preceding claims, **characterised in that** the first lens element (34) focuses the light emitted by the light source (33) onto a focal point (35) which is arranged in the light direction behind the image element (29).

7. Projector according to claim 1 or 2, **characterised in that** the first lens element (34) of the lighting system has an extension (EL) that is transverse to the optical axis and that substantially corresponds to an extension (EB) of the image element which is transverse to the optical axis (Fig. 9).

8. Projector according to claim 7, **characterised in that** the first lens element (34) bundles the light emitted by the light source (33) in such a way that the image element (29) is impinged upon by a substantially parallel light ray bundle (Fig. 9).

9. Projector according to one of the proceeding claims, **characterised in that** the projection lens (28) has a second lens element (40) that is arranged close to the focal point (35) of the first lens element.

10. Projector according to one of the preceding claims, **characterised in that** the first lens element (34) is formed from a plurality of collimators (42a, 42b, 42c, 42d) that are in particular arranged along a plane.

11. Projector according to one of the preceding claims, **characterised in that** a plurality of collimators (42a, 42b, 42c, 42d) that are in particular arranged along a plane are connected upstream of the first lens element (34) in the light direction.

12. Projector according to one of the preceding claims, **characterised in that** at least one LED (33a, 33b, 33c, 33d) is assigned to each collimator (42a, 42b, 42c, 42d) of the plurality of collimators.

13. Projector according to one of the preceding claims, **characterised in that** the projector (10) is fixedly mounted on a building surface (12).

14. Projector according to one of the preceding claims, **characterised in that** the image element is arranged in an exchangeable mounting (32).

## Revendications

1. Projecteur (10), comprenant un système d'éclairage (27) pour éclairer un élément d'image (29), et comprenant une optique de représentation d'image (28) par l'intermédiaire de laquelle l'élément d'image peut être projeté sur une surface de bâtiment ou sur une surface partielle de bâtiment (13), **caractérisé en ce que** la source de lumière du système d'éclairage est au moins une DEL (33, 33a, 33b, 33c, 33d, 33e, 33f, 33g), **en ce qu'**au moins un premier élément de lentille (34) conçu sous la forme d'une optique de collimation est agencé entre l'élément d'image et la source de lumière, et **en ce que** l'élément d'image (29) est fourni à l'aide d'un cadreur.

2. Projecteur selon la revendication 1, **caractérisé en ce que** le système d'éclairage (27), l'élément d'image (29) ainsi que l'optique de représentation d'image (28) sont agencés le long d'un axe optique (A).

3. Projecteur selon la revendication 1 ou 2, **caractérisé en ce que** le système d'éclairage (27) présente une extension (EP, EL) transversale à l'axe optique (A) qui dépasse une extension (EB) de l'élément d'image transversale à l'axe optique.

4. Projecteur selon l'une quelconque des revendications précédentes, **caractérisé en ce que** le premier élément de lentille (34) du système d'éclairage (27) présente une extension (EL) transversale à l'axe optique (A) qui dépasse une extension (EB) de l'élément d'image (29) transversale à l'axe optique.

5. Projecteur selon la revendication 4, **caractérisé en ce que** la source de lumière (33) est constituée par une pluralité de DEL (33, 33a, 33b, 33c, 33d, 33e, 33f, 33g) qui sont agencées le long d'une platine (P) qui présente une extension (EP) transversale à l'axe optique (A) qui dépasse une extension (EB) de l'élément d'image transversale à l'axe optique.

6. Projecteur selon l'une quelconque des revendications précédentes, **caractérisé en ce que** le premier élément de lentille (34) focalise la lumière émise par la source de lumière (33) sur un point focal (35) qui est situé en aval de l'élément d'image (29) dans la direction de la lumière.

7. Projecteur selon la revendication 1 ou 2, **caractérisé en ce que** le premier élément de lentille (34) du système d'éclairage présente une extension (EL) transversale à l'axe optique qui correspond sensiblement à une extension (EB) de l'élément d'image transversale à l'axe optique (Figure 9).

8. Projecteur selon la revendication 7, **caractérisé en ce que** le premier élément de lentille (34) concentre la lumière émise par la source de lumière (33) de telle sorte que l'élément d'image (29) soit frappé par un faisceau de rayons lumineux sensiblement parallèles (Figure 9).

9. Projecteur selon l'une quelconque des revendications précédentes, **caractérisé en ce que** l'optique de représentation d'image (28) comprend un deuxième élément de lentille (40) qui est agencé à proximité du point focal (35) du premier élément de lentille.

10. Projecteur selon l'une quelconque des revendications précédentes, **caractérisé en ce que** le premier élément de lentille (34) est formé par une pluralité de collimateurs (42a, 42b, 42c, 42d) qui sont agencés en particulier selon un plan.

11. Projecteur selon l'une quelconque des revendications précédentes, **caractérisé en ce que** le premier élément de lentille (34) est précédé, dans la direction de la lumière, par une pluralité de collimateurs (42a, 42b, 42c, 42d) qui sont en particulier agencés le long d'un plan.

12. Projecteur selon l'une quelconque des revendications précédentes, **caractérisé en ce qu'**au moins une DEL (33a, 33b, 33c, 33d) est associée respectivement à chaque collimateur (42a, 42b, 42c, 42d) parmi la pluralité de collimateurs.

13. Projecteur selon l'une quelconque des revendications précédentes, **caractérisé en ce que** le projecteur (10) est monté fixement sur une surface de bâtiment (12).

14. Projecteur selon l'une quelconque des revendications précédentes, **caractérisé en ce que** l'élément d'image est agencé à l'intérieur d'une monture interchangeable (32).
